# EUROPEAN PATENT APPLICATION

(11) **EP 2 385 026 A1**
(43) Date of publication of application: **09.11.2011**
(21) Application number: 10735885.5
(22) Date of filing: 29.01.2010
(51) Int. Cl.: C03B 33/10, B28D 1/24, B28D 5/04, C03B 33/04

(54) **CUTTER AND METHOD FOR CUTTING BRITTLE MATERIAL SUBSTRATE USING SAME**

(30) Priority: 30.01.2009 JP 2009019499
(71) Applicant: Mitsuboshi Diamond Industrial Co., Ltd., Suita-city, Osaka 564-0044 (JP)
(72) Inventor: TOMINAGA, Keisuke, Suita-city Osaka 564-0044 (JP); MAEKAWA, Kazuya, Suita-city Osaka 564-0044 (JP)
(74) Representative: TBK
(86) International application number: PCT/JP2010/051184
(87) International publication number: WO 2010/087423

(57) **Abstract**

A cutter with which a diagonal crack can be created without fail deeply within a brittle material substrate is provided. The cutter has such a form that two cones or truncated cones are joined through the same bottom so as to share the same rotational axis (22), and the circumference of the above described bottom is used as the blade edge ridge line (21). In addition, grooves 23 that incline at a predetermined angle relative to the direction of the rotational axis are created around this blade edge ridge line (21) at predetermined intervals. Furthermore, the angles between the sides of the above described two cones or truncated cones and the above described bottom are different from each other (blade angle (θ1), blade angle (θ2)).

## Description

### Technical Field

The present invention relates to a cutter, and in particular to a cutter that is appropriate for use in cutting a brittle material substrate.

### Background Art

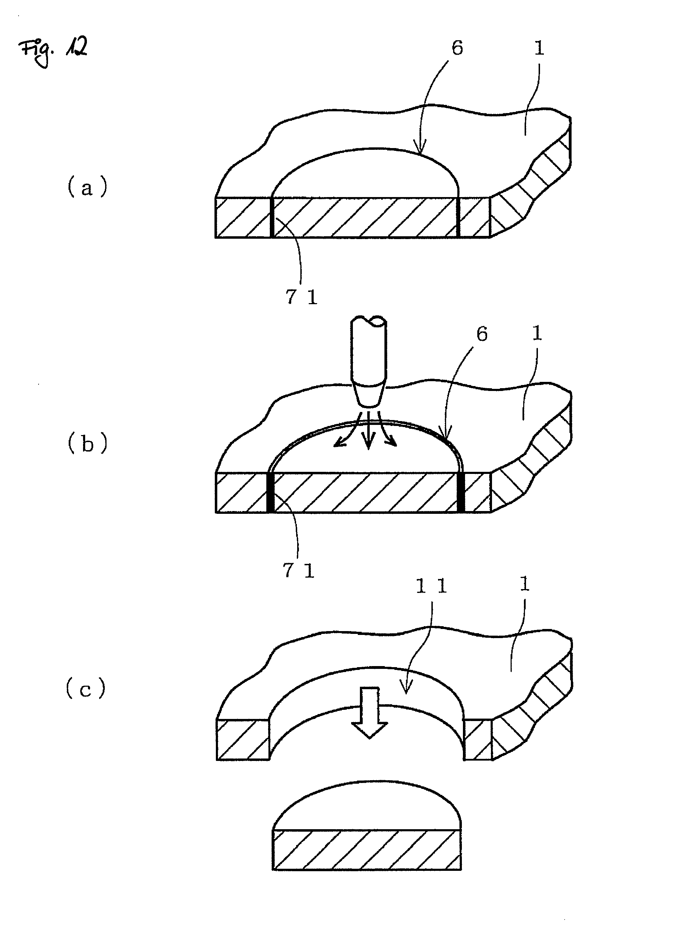

In the case where a through hole is created in a glass substrate, which is a brittle material substrate, the glass substrate 1 is scribed, as shown in Figs 12(a) to 12(c), in a closed curve on the surface with a cutter, not shown, so that a scribe line 6, which is a crack 71 perpendicular to the surface of the substrate, is created (Fig 12(a)), and then the area surrounded by the scribe line 6 is cooled so as to shrink (Fig 12(b)) so that the area surrounded by the scribe line 6 is removed to create the through hole 11 (Fig 12(c)).

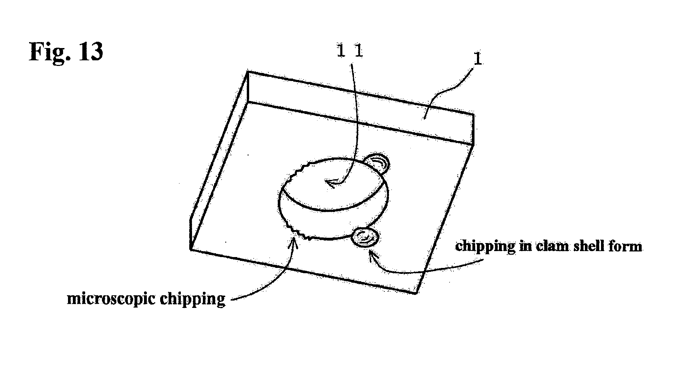

In accordance with this conventional method, however, the step of shrinking the area surrounded by the scribe line 6 is necessary. In the case where the area has not been shrunk enough, as shown in Fig 13, the surfaces facing through the crack 71 make contact with each other when the area surrounded by the scribe line 6 is removed, and thus microscopic chipping or chipping in clam shell form is caused around the through hole 11.

Thus, Patent Document 1, for example, has proposed such a technology that a cutter having different blade angles between the left and the right of the blade edge ridge line is used or a cutter having the same blade angle between the left and the right of the blade edge ridge line is moved over the surface of the glass substrate in such a state as to be inclined relative to the surface, and as a result a crack that inclines relative to the direction of the thickness of the glass substrate 1, that is to say, a crack with an inclination which makes the removal of the region surrounded by the scribe line 6 easy, is created, and then an external force is applied in the direction perpendicular to this region so that this region is removed.

### Prior Art Document

### Patent Document

Patent Document 1: Japanese Unexamined Patent Publication H7 (1995)-223828

### Summary of the Invention

### Problem to Be Solved by the Invention

In the above described technology, however, the inclined crack may not go deep in the direction of the thickness of the substrate. In some cases, though the crack may have a desired angle of inclination up to a certain depth of the glass substrate 1, the inclination of the crack suddenly becomes smaller relative to the direction of the thickness of the substrate in the deeper areas in such a manner that the inclination of the crack is approximately the same as the direction of the thickness of the substrate, that is to say, perpendicular to the surface of the substrate, in the area close to the rear surface of the glass substrate 1.

In such cases where the crack does not go deep or the crack has a long portion perpendicular to the surface of the substrate, the surfaces facing each other with the crack in between make contact when the region surrounded by the scribe line is removed, and microscopic chipping or chipping in clam shell form occurs around the periphery of the through hole 11, as shown in Fig 13.

The present invention is provided in view of these problems in the prior art, and an object thereof is to provide a cutter which can create an inclined crack that runs deep in the direction of the thickness of the substrate without fail.

Another object of the present invention is to provide a method for creating a through hole smoothly in a brittle material substrate or cutting out a substrate in disc form from a brittle material substrate using a cutter without causing microscopic chipping or chipping in clam shell form around the periphery of the through hole.

### Means for Solving Problem

In order to achieve the above describe objects, the cutter according to the present invention has such a form that two cones or truncated cones sharing the same rotational axis are joined through the same bottom so that the circumference of the above described bottom forms a blade edge ridge line, and is **characterized in that** notches inclined at a predetermined angle relative to the direction of the rotational axis are created in the circumference at predetermined intervals, and the angles formed between the sides of the above described two cones or truncated cones and the above described bottom (hereinafter referred to as blade angles) are different from each other.

Here, from the point of view of the crack inclined relative to the surface of the substrate being created without fail, it is preferable for the difference between the angles formed between the sides of the above described two cones or truncated cones and the above described bottom to be less than 30 ° .

In addition, the method for cutting a brittle material substrate according to the present invention is **characterized in that** at least either a brittle material substrate or the above described cutter is moved so as to draw a closed curve in such a state that the above described cutter is pressed against the surface of the brittle material substrate, and thus a scribe line is created from a crack inclined relative to the direction of the thickness of the brittle material substrate, and after that pressure is applied to the above described brittle material substrate so that the above described crack expands to the rear surface of the above described brittle material substrate, and thus the above described brittle material substrate is cut.

Here, from the point of view of preventing microscopic cracks from occurring on the surface of the substrate, it is preferable for at least either the above described brittle material substrate or the above described cutter to be moved in such a state that the blade edge ridge line of the above described cutter is perpendicular to the above described brittle material substrate.

### Effects of the Invention

In the cutter according to the present invention, notches inclined at a predetermined angle relative to the direction of the rotational axis are created at predetermined intervals around the circumference, and the two blade angles relative to the blade edge ridge line are different from each other, and therefore a crack created in a brittle material substrate using this cutter is inclined relative to the direction of the thickness of the substrate and runs deep into the substrate.

In addition, in accordance with the method for cutting according to the present invention, the above described cutter is used, and therefore a through hole can be created smoothly in a brittle material substrate or a substrate in disc form can be cut out without causing microscopic chipping or chipping in clam shell form around the periphery.

### Brief Description of the Drawings

Fig 1 is a perspective diagram showing an example of the cutter according to the present invention;
Figs 2(A) and 2(B) are diagrams showing an enlargement of a portion of the cutter as viewed in the directions of arrows A and B, respectively;
Fig 3 is a cross sectional diagram through a notch showing an enlargement of a portion of the cutter in Fig 1;
Figs 4(A) and 4(B) are diagrams showing an enlargement of another example of notches created in the cutter according to the present invention;
Fig 5 is a perspective diagram showing another example of the cutter according to the present invention;
Figs 6(a) and 6(b) are diagrams showing the steps of an example of the method for cutting according to the present invention;
Figs 7(a) and 7(b) are cross sectional diagrams corresponding to Figs 6(a) and 6(b);
Fig 8 is a schematic diagram showing the form of a crack in the case where the substrate is thick and hard;
Figs 9(a) to 9(c) are diagrams showing the steps of another example of the method for cutting according to the present invention;
Figs 10(a) to 10(c) are cross sectional diagrams corresponding to Figs 9(a) to 9(c);
Figs 11(a) to 11(e) are diagrams showing the steps of still another example of the method for cutting according to the present invention;
Figs 12(a) to 12(c) are diagrams showing the steps of a method for creating a through hole according to the prior art; and
Fig 13 is a perspective diagram illustrating the problems with the method for creating a through hole according to the prior art.

### Best Mode for Carrying Out the Invention

In the following, the cutter and the method for cutting a brittle material substrate according to the present invention are described in further detail, but the present invention is not limited to any of these embodiments.

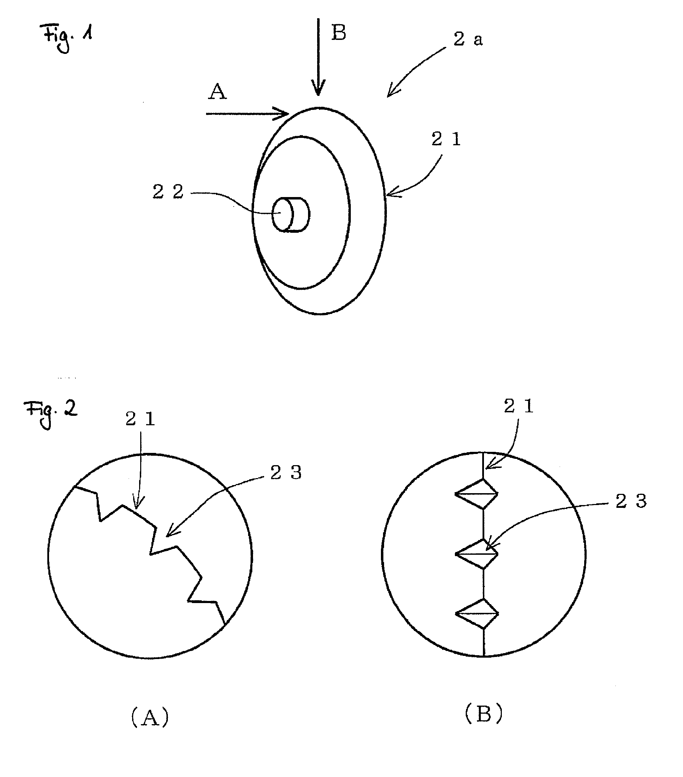

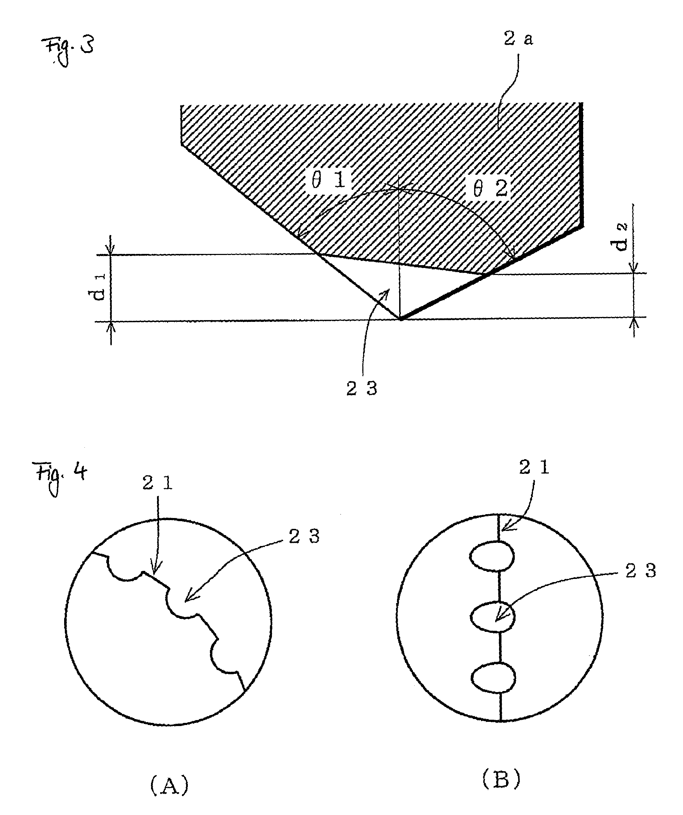

Figs 1 to 3 show the cutter according to one embodiment of the present invention. Fig 1 is a perspective diagram showing the entirety of the cutter; Fig 2 (A) is a diagram showing an enlargement of a portion with the blade edge ridge line as viewed in the direction of the arrow A in Fig 1; Fig 2(B) is a diagram showing an enlargement of a portion with the blade edge ridge line as viewed in the direction of the arrow B in Fig 1; and Fig 3 is a cross sectional diagram through a notch showing a portion of the cutter. The cutter 2a in Fig 1 has such a form that two truncated cones sharing the rotational axis 22 are joined through the same bottom and a blade edge ridge line 21 is created in the circumference around the bottom. The heights of the two truncated cones are usually the same but may be different. As can be seen from Fig 3, the blade angles θ1 and 82 formed between the sides of the two truncated cones and the bottom are different in this cutter 2a where notches 23 inclined at a predetermined angle relative to the direction of the rotational axis are created at predetermined intervals around the circumference along the blade edge ridge line 21.

When a line is scribed using this cutter 2a, a crack inclined to the left is created downwards in Fig 3. That is to say, in the case where a cutter where the blade angles θ1 and θ2 are different is used, the crack created in a substrate is inclined towards the area that is point symmetric with the cutter portion having a larger blade angle θ2 with the point of contact between the blade edge and the substrate as the point of symmetry. In addition, in the case where a cutter with notches where at a certain angle are created around the circumference at predetermined intervals is used, the crack created in a substrate is inclined towards the area that is point symmetric with the side of the blade where the notch has a shallower depth d₂ with the point of contact between the blade edge and the substrate as the point of symmetry. Accordingly, it is better for the notches to have a depth shallower on the side where the blade angle is greater in order to create a deep crack inclined relative to the direction of the thickness of the substrate without fail.

The greater the difference between the blade angles θ1 and θ2 in the cutter 2a is, the greater the angle at which the crack is inclined relative to the direction of the thickness of the substrate is. Meanwhile, when the angle of inclination of the crack is great, the crack does not go deep into the substrate, thus making it difficult to cut the substrate. Therefore, it is preferable for the difference between the blade angles θ1 and θ2 to be less than 30 °. Though there are no particular limitations in the respective blade angles θ1 and θ2, it is preferable for the blade angle θ1 to be in a range from 30 ° to 75 °, for the blade angle θ2 to be in a range from 65 ° to 90 °, and for the blade angle (θ1 + θ2) to be in a range from 100 ° to 160 °.

It is preferable for the intervals of the notches 23 created in the cutter 2a to be in a range from 20 µm to 200 µm. As for the depth of the notches 23 at the two ends, it is preferable for the depth d₁ to be in a range from 2 µm to 2500 µm and for the depth d₂ to be in a range from 1 µm to 20 µm.

It is preferable for the outer diameter of the cutter 2a to be in a range from 1 mm to 10 mm. In the case where the outer diameter of the cutter is smaller than 1 mm, the ease of handling and the durability may be low. In the case where the outer diameter is greater than 10 mm, the inclined crack may not go deep when a line is scribed. It is more preferable for the outer diameter of the cutter 2a to be in a range from 1 mm to 6 mm. In addition, the load applied to the cutter 2a and the speed of scribing are appropriately determined depending on the type and thickness of the brittle material substrate, and the load is usually in a range from 0.05 MPa to 0.4 MPa and the speed of scribing is in a range from 10 mm/sec to 500 mm/sec.

Figs 4(A) and 4(B) show another embodiment of the cutter used in the present invention. Fig 4(A) is a diagram showing an enlargement of a portion including the blade edge ridge line as viewed in the direction of arrow A in Fig 3, and Fig 4(B) is a diagram showing an enlargement of a portion including the blade edge ridge line as viewed in the direction of arrow B in Fig 3. As shown in these figures, the form of the notches 23 may be in U shape. In this case, the intervals of the notches 23 in U shape and the depth d₁ and d₂ at the two ends of the notches 23 have an appropriate range in the same way as illustrated in the above described embodiment. Here, the notches may be in V shape, U shape, serrated form or other forms of recesses as viewed in Fig 4(A).

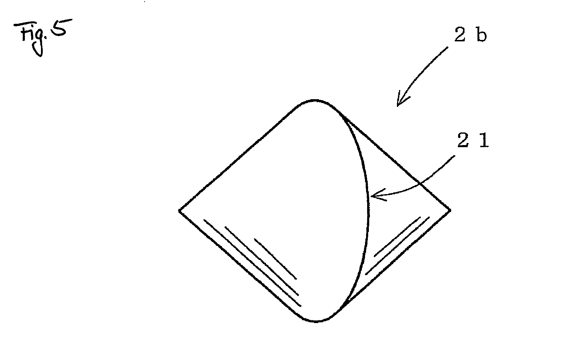

Fig 5 shows the cutter according to another embodiment of the present invention. The cutter 2b in this figure has such a form that two cones sharing the same rotational axis and having different heights are joined through the same bottom. In the same manner as the cutter shown in Fig 1, a blade edge ridge line 21 is created in the circumference around the bottom. Though not shown in this figure, the blade angles θ1 and θ2 formed between the sides of the two cones and the bottom are different, and notches 23 inclined at a predetermined angle relative to the direction of the rotational axis are created around the circumference at predetermined intervals along the blade edge ridge line 21. This cutter 2b may be used to create a crack inclined relative to the direction of the thickness of the substrate.

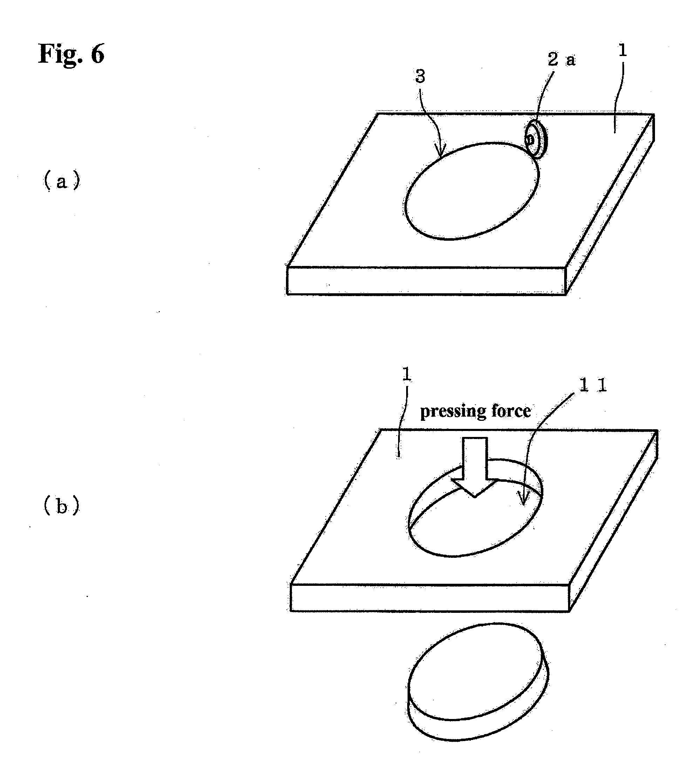

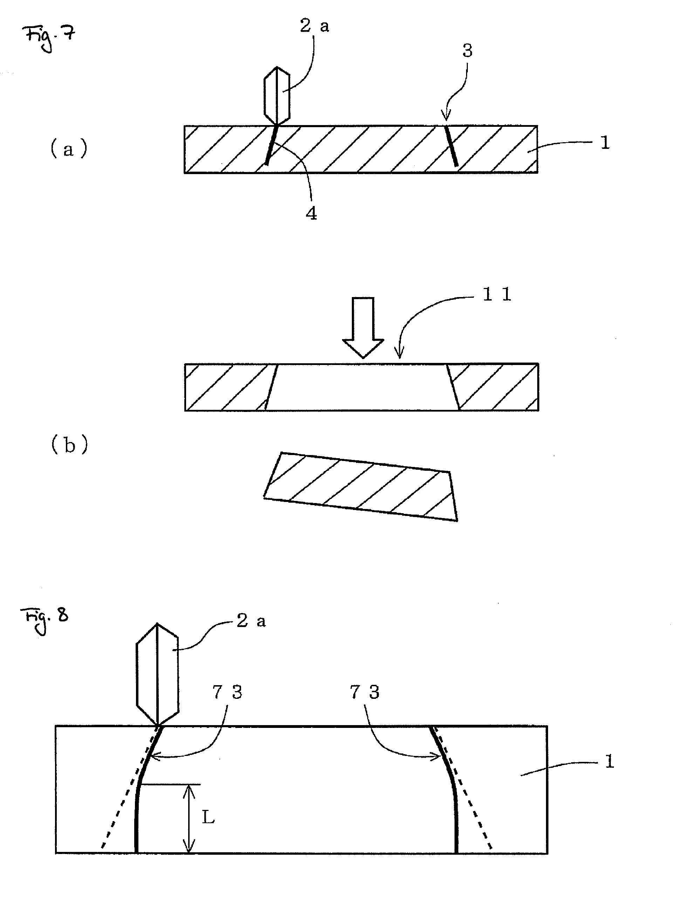

Next, the method for cutting a brittle material substrate according to the present invention is described. Figs 6(a) to 7(b) are diagrams showing the steps of the method for cutting according to one embodiment of the present invention. These diagrams show the steps of creating a circular through hole in a glass substrate, which is a brittle material substrate, or removing a substrate in disc form from a glass substrate. First, as shown in Fig 6(a), the cutter 2a shown in Fig 1 is used to scribe a circular scribe line 3 on a glass substrate 1. As a result of this scribing, a crack 4 inclined relative to the direction of the thickness of the glass substrate 1 so as to spread outwards in the direction of the radius is created, as shown in Fig 7(a). The thus-created crack 4 is different from cracks created using a conventional cutter in that it goes deep into the glass substrate 1 while maintaining the predetermined angle of inclination.

Next, as shown in Figs 6(b) and 7(b), when a force is applied to the region surrounded by the scribe line 3 from the top to the bottom, the region easily comes off because the inclination of the crack 4 makes it easy for the region to come off. As a result, a glass substrate having a through hole 11 or a circular substrate, such as a disc substrate, is fabricated. Here, the inclination of the created crack may go inwards in the direction of the radius. In this case, however, it is necessary to apply a force to the region surrounded by the scribe line 3 from the bottom to the top in order to remove the region.

Even in the case where the crack 4 fails to reach the rear surface of the glass substrate 1, the above described force can be applied to make the crack 4 reach the rear surface of the glass substrate 1, and thus there is no risk of a problem arising in the cutting of the region surrounded by the scribe line 3. It is naturally possible to heat and/or cool the glass substrate 1 so that the glass substrate 1 expands/shrinks before the external force is applied to the glass substrate 1 in order to make the crack 4 reach the rear surface of the glass substrate 1. When the glass substrate 1 is expanded/ shrunk before an external force is applied to the glass substrate as described above, the process of removing the region surrounded by the scribe line 3 from the glass substrate can be carried out more smoothly.

The above described method for cutting is appropriate for use in the case where the brittle material is relatively thin or very brittle. In the case where the brittle material substrate is thick or hard, a crack that is inclined at a predetermined angle to the rear surface of the substrate sometimes fails to be created even when using the cutter according to the present invention. Concretely, as shown in Fig 8, though the crack 73 keeps a predetermined angle of inclination up to a certain depth from the front surface of the substrate 1, the inclination of the crack 73 suddenly becomes small relative to the thickness of the substrate in deeper places in such a manner that the inclination of the crack 73 may approximately be parallel to the direction of the depth of the substrate close to the rear surface of the substrate 1.

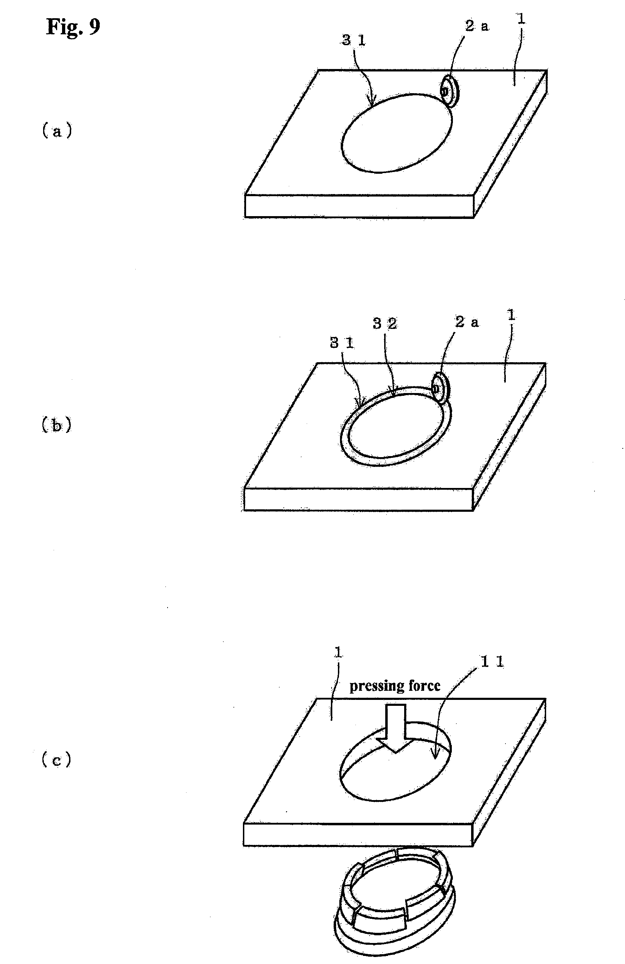

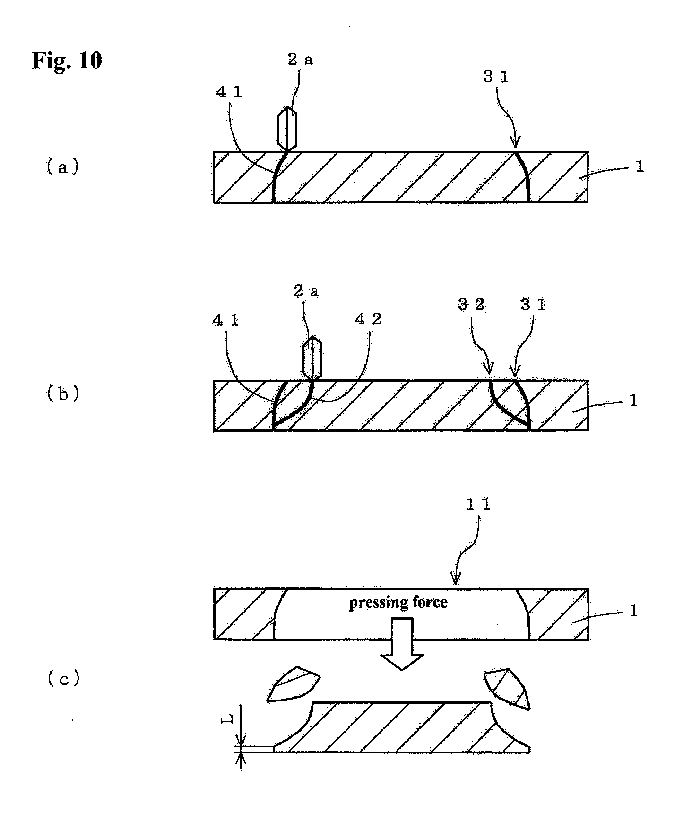

In such a case, using the following method for cutting is recommended. Figs 9(a) to 10(c) are diagrams showing the steps for a method for cutting that is appropriate for use. Here, in the case of these diagrams showing the steps, a through hole is created in a brittle material substrate, such as a glass substrate. Figs 9(a) to 9(c) are perspective diagrams and Figs 10(a) to 10(c) are cross sectional diagrams. First, as shown in Fig 9(a), the cutter 2a shown in Fig 1 is used to scribe the outer periphery of the region to be removed to create a through hole on the glass substrate 1 so that a first scribe line 31 is created. As a result of this scribing, as shown in Fig 10(a), a first crack 41, which inclines in a shallow place so as to spread outwards in the direction of the radius and is approximately perpendicular to the surface of the substrate in a deep place, is created in the glass substrate 1.

Next, as shown in Fig 9(b), a circle which is concentric with the first scribe line 31 is scribed inside the first scribe line 31 using the cutter 2a so as to create a second scribe line 32. As a result of this scribing, as shown in Fig 10(b), a second crack 42, which spreads outwards in the direction of the radius at a small inclination in a shallow place and where the inclination increases suddenly in a deep place so as to reach the first crack 41, is created. As a result, cracks having inclinations with a short portion L perpendicular to the surface of the substrate (see Fig 10(c)) are created in order to remove the region surrounded by the first scribe line 31 from the glass substrate 1.

Here, even when the second crack 42 is created using the same cutter 2a, the second crack 42 reaches the first crack 41 without becoming parallel to the first crack 41 because the creation of the first crack is considered to have changed the state of the stress inside the brittle material around the first crack, which is different from that of the portions having no cracks. It is confirmed that when a conventional linear scribe line is created in the vicinity of and along an end of a substrate, the crack created along the scribe line tends to incline towards the end side. Accordingly, in order for the second crack 42 to reach the first crack 41, it is necessary for the distance between the first scribe line 31 and the second scribe line 32 to be adjusted, taking the thickness of the substrate 1 and the pressure through which the cutter 2a is pressed into consideration, for example. It is preferable for the distance between the first scribe line 31 and the second scribe line 32 to be in a range from 0.1 mm to 1 mm. In the case where the distance between the first scribe line 31 and the second scribe line 32 is too great, the second crack 42 is approximately parallel to the first crack 41, and thus does not reach the first crack 41. Conversely, in the case where the distance between the first scribe line 31 and the second scribe line 32 is too small, the portion L of the first crack 41 perpendicular to the surface of the substrate (see Fig 10(c)) is long, and thus there is a risk that microscopic chipping or chipping in clam shell form may occur when the region surrounded by the first scribe line 31 is removed from the glass substrate 1.

Then, as shown in Figs 9(c) and 10(c), when a downward force is applied to the region surrounded by the first scribe line 31, the inclination of the first crack 41 and the second crack 42 makes it easy for the region to come off, and thus a through hole 11 is created in the glass substrate 1. Here, even when the first crack 41 does not reach to the rear surface of the glass substrate 1, the application of the above described external force allows the first crack 41 to extend to the rear surface of the glass substrate 1, and therefore there is no risk that any problems will arise in the creation of the through hole 11. Naturally, it is possible to heat and/or cool the glass substrate 1 so that the glass substrate 1 expands or shrinks before an external force is applied to the glass substrate 1, and thus the first crack 41 may extend to the rear surface of the glass substrate 1. When the glass substrate 1 is expanded or shrunk before an external force is applied to the glass substrate 1 as described above, the process for removing the region surrounded by the first scribe line 31 from the glass substrate becomes more smooth.

In accordance with the method for cutting according to the present invention, different cutters may be used to create the first scribe line 31 and the second scribe line 32. For example, a conventional cutter for creating a crack perpendicular to the surface of the substrate may be used to create the first scribe line 31, and the cutter according to the present invention for creating a crack which greatly inclines relative to the direction of the thickness of the substrate may be used to create the second scribe line 32.

Publicly-known substrates can be cited as examples of the brittle material substrate 1 which is the subject of the method for cutting according to the present invention. These examples are brittle material substrates, such as of glass, ceramic, silicon and sapphire. In addition, the thickness of the brittle material substrate 1 that can be cut in accordance with the method for cutting according to the present invention depends on the material of the brittle material substrate, and the thickness up to approximately 2 mm is appropriate in the case where the brittle material substrate is a glass substrate. In addition, there are no particular limitations to the area surrounded by the looped line, but in general the smaller the area is, the more difficult it is to create the through hole, and even a through hole having a diameter of approximately 15 mm can be easily created in accordance with the method for cutting according to the present invention.

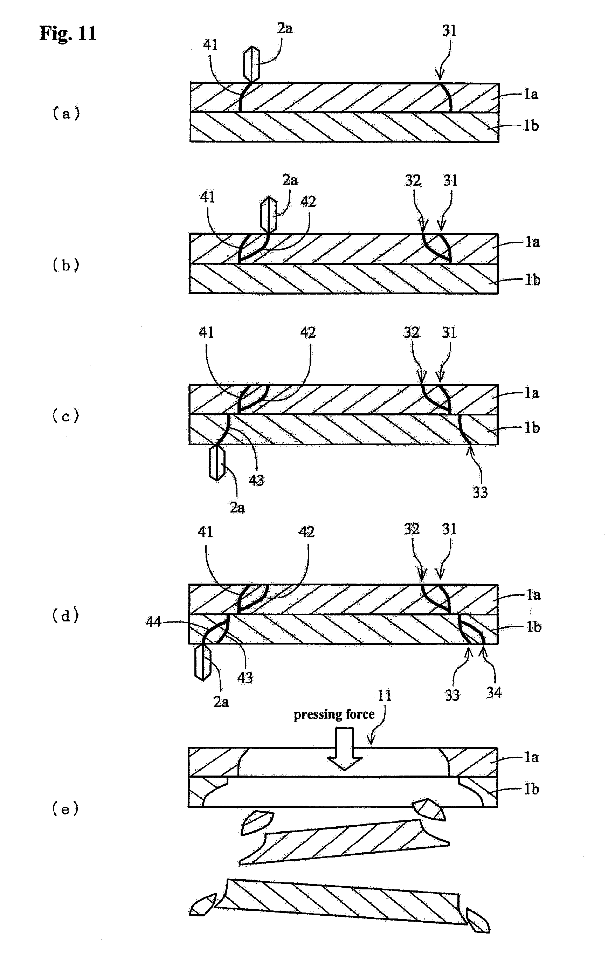

Figs 11(a) to 11(e) show the method for cutting according to another embodiment of the present invention. In accordance with the method for creating a through hole illustrated in these figures, a through hole is created in two brittle material substrates 1a and 1b (for example, glass substrates) which are joined directly or with a microscopic space in between. First, as shown in Fig 11(a), the outer periphery of the region to be removed to create a through hole is scribed on the upper glass substrate 1a using the cutter 2a in disc form where a blade is formed around the outer circumference so as to create a first scribe line 31, which consists of a first crack 41. Next, as shown in Fig 11(b), a circle that is concentric with the first scribe line 31 is scribed inside the first scribe line 31 using the cutter 2a so that a second scribe line 32, which consists of a second crack 42, is created. As described above, this second crack 42 reaches the first crack 41, and thus cracks having inclinations with a short portion L perpendicular to the surface of the substrate (see Fig 10(c)) are created in order to remove the region surrounded by the first scribe line 31 from the upper glass substrate 1a.

Next, as shown in Fig 11(c), a loop is scribed using the cutter 2a on the lower glass substrate 1b inside the outer periphery of the region to be removed to create a through hole and outside of the first scribe line 31 so that a third scribe line 33, which consists of a third crack 43, is created. Next, as shown in Fig 11(d), the outer periphery of the region to be removed to create a through hole is scribed using the cutter 2a outside the third scribe line 33 so that a fourth scribe line 34, which consists of a fourth crack 44, is created. As described above, this fourth crack 44 reaches the third crack 43, and thus cracks having inclinations with a short portion L perpendicular to the surface of the substrate (see Fig 10(c)) are created in order to remove the region surrounded by the fourth scribe line 34 from the lower glass substrate 1b.

Then, as shown in Fig 11(e), when a downward force is applied to the region surrounded by the first scribe line 31, the region to be removed to create a through hole in the upper glass substrate 1a is removed from the upper glass substrate 1a due to the inclinations of the first crack 41 and the second crack 42, and the region to be removed to create a through hole in the lower glass substrate 1b is removed from the lower glass substrate 1b due to the inclinations of the third crack 43 and the fourth crack 44. As a result, a through hole 11 is created in the two glass substrates 1a and 1b, which are layered on top of each other.

Here, in the case where the first scribe line 31 and the second scribe line 32 are created in the upper glass substrate 1a in this order after the third scribe line 33 and the fourth scribe line 34 are created in the lower glass substrate 1b in this order, a through hole 11 can be created in the two glass substrates 1a and 1b, which are layered on top of each other, in the same manner as in the above described embodiment.

Though the scribe lines drawn on the surface of the glass substrate 1 are looped curves in circular form in the above described embodiments, the shape of the scribe line is not limited to this and any shape is possible as long as it is a looped curve.

### Examples

In the following, the present invention is described in further detail on the basis of examples, but the present invention is not limited to any of these examples.

### Example 1

A soda glass substrate having a thickness of 1.1 mm was attached to a scribing apparatus (MP500A made by Mitsuboshi Diamond Industrial Co., Ltd.) so as to be scribed to create a scribe line. The specifications of the used cutter and the conditions for scribing were as follows. Then, the solder glass substrate was cut at a right angle along a line that crossed the created scribe line, and the angle of inclination of the created crack relative to the surface of the glass substrate was measured in the cross section. Twenty lines were scribed under the same conditions, and the average value of these measured values was considered to be the angle of inclination of the crack. Table 1 shows the angle of inclination of a crack together with a photograph of an enlarged portion of a glass substrate in a cross section.

### (Cutter with Inclined Notches)

diameter: 2.0 mm
thickness: 0.65 mm
blade angle: 130 ° (blade angle θ1: 60 °, blade angle θ2: 70 °)
number of notches: 135
depth of notches: (d₁) 16.96 µm, (d₂) 8.95 µm

### (Conditions for Scribing)

load for scribing: 0.22 MPa
depth of cut: 0.20 mm
adsorption pressure: approximately -35 kPa

### Comparative Example 1

A cutter having the same structure as in Example 1, except that the blade angles θ1 and θ2 were both 75 °, the depth of the notches d₁ was 11.29 µm and the depth of the notches d₂ was 8.97 µm, was used to scribe a substrate in the same manner as in Example 1, and the angle of inclination of the created crack was measured. Table 1 shows the angle of inclination of a crack together with a photograph of an enlarged portion of a glass substrate in a cross section.

### Comparative Example 2

A cutter having the same structure as in Example 1, except that the blade angles θ1 and θ2 were both 75 °, the depth of the notches d₁ was 20.40 µm and the depth of the notches d₂ was 9.51 µm, was used to scribe a substrate in the same manner as in Example 1, and the angle of inclination of the created crack was measured. Table 1 shows the angle of inclination of a crack together with a photograph of an enlarged portion of a glass substrate in a cross section.

### Example 2

A substrate was scribed in the same manner as in Example 1, except that non-alkali glass having a thickness of 1.1 mm was used as a glass substrate and the load for scribing was 0.32 MPa, and the angle of inclination of the created crack was measured. Table 2 shows the angle of inclination of a crack together with a photograph of an enlarged portion of a glass substrate in a cross section.

### Comparative Example 3

A cutter having the same structure as in Comparative Example 1 was used to scribe a substrate in the same manner as in Example 1, except that non-alkali glass having a thickness of 1.1 mm was used as a glass substrate and the load for scribing was 0.32 MPa, and the angle of inclination of the created crack was measured. Table 2 shows the angle of inclination of a crack together with a photograph of an enlarged portion of a glass substrate in a cross section.

### Comparative Example 4

A cutter having the same structure as in Comparative Example 2 was used to scribe a substrate in the same manner as in Example 1, except that non-alkali glass having a thickness of 11 mm was used as a glass substrate and the load for scribing was 0.32 MPa, and the angle of inclination of the created crack was measured. Table 2 shows the angle of inclination of a crack together with a photograph of an enlarged portion of a glass substrate in a cross section.

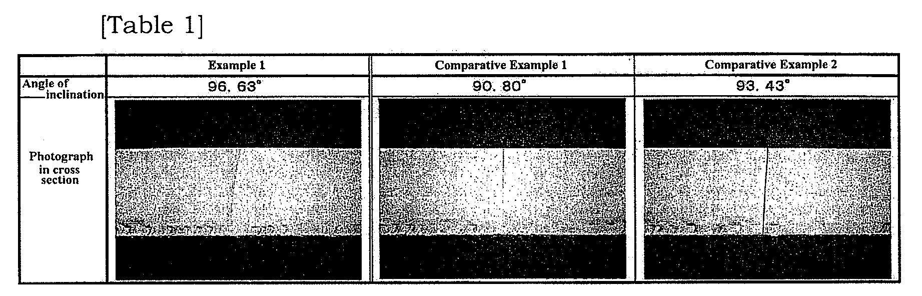

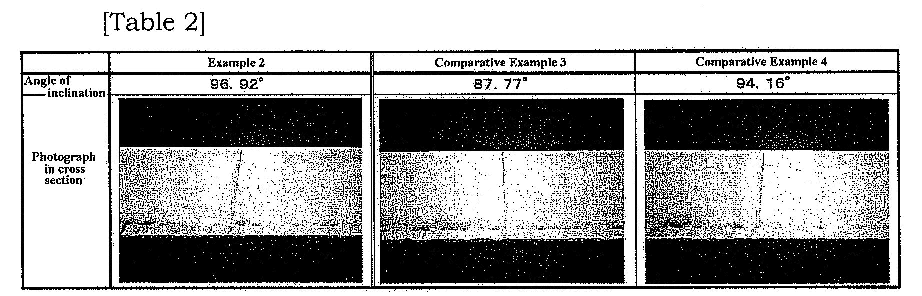

### Industrial Applicability

When the cutter according to the present invention is used to scribe a brittle material substrate, the created crack inclines relative to the direction of the thickness of the substrate and reaches deep into the substrate. As a result, a through hole can be created smoothly in a brittle material substrate or a substrate in disc form can be cut out from a brittle material substrate without causing microscopic chipping or chipping in clam shell form in the periphery, and thus the cutter according to the present invention is useful.

### Explanation of Symbols

- 1: glass substrate (brittle material substrate)
- 1a: upper glass substrate
- 1b: lower glass substrate
- 2a, 2b: cutter
- 11: through hole
- 21: blade edge ridge line
- 22: rotational axis
- 23: notch
- 31: first scribe line
- 32: second scribe line
- 33: third scribe line
- 34: fourth scribe line
- 41: first crack
- 42: second crack
- 43: third crack
- 44: fourth crack
- θ1, θ2: blade angle

## Claims

1. A cutter having such a form that two cones or truncated cones sharing the same rotational axis are joined through the same bottom so that the circumference of said bottom forms a blade edge ridge line, **characterized in that** notches inclined at a predetermined angle relative to the direction of the rotational axis are created in the circumference at predetermined intervals, and the angles formed between the sides of said two cones or truncated cones and said bottom are different from each other.

2. The cutter according to Claim 1, wherein the difference between the angles formed between the sides of said two cones or truncated cones and said bottom is less than 30 24°.

3. A method for cutting a brittle material substrate, **characterized in that** at least either a brittle material substrate or the cutter according to Claim 1 or 2 is moved so as to draw a closed curve in such a state that said cutter is pressed against the surface of the brittle material substrate, and thus a scribe line is created from a crack inclined relative to the direction of the thickness of the brittle material substrate, and after that pressure is applied to said brittle material substrate so that said crack expands to the rear surface of said brittle material substrate, and thus said brittle material substrate is cut.

4. The method for cutting a brittle material substrate according to Claim 3, wherein at least either said brittle material substrate or said cutter is moved in such a state that the blade edge ridge line of said cutter is perpendicular to said brittle material substrate.
